(19) Europäisches Patentamt
European Patent Office
Office européen des brevets

(11) **EP 4 394 641 A1**

(12) **EUROPEAN PATENT APPLICATION**
published in accordance with Art. 153(4) EPC

(43) Date of publication:
**03.07.2024  Bulletin 2024/27**

(21) Application number: **22866150.0**

(22) Date of filing: **24.05.2022**

(51) International Patent Classification (IPC):
**G06F 30/20** $^{(2020.01)}$

(52) Cooperative Patent Classification (CPC):
Y02E 60/10

(86) International application number:
**PCT/CN2022/094746**

(87) International publication number:
**WO 2023/035672 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **10.09.2021  CN 202111058590**

(71) Applicant: SVOLT ENERGY TECHNOLOGY CO., LTD
Changzhou, Jiangsu 213200 (CN)

(72) Inventors:
• HU, Weidong
  hangzhou, Jiangsu 213200 (CN)
• WANG, Maofan
  hangzhou, Jiangsu 213200 (CN)
• HU, Chaoshuai
  hangzhou, Jiangsu 213200 (CN)
• XU, Yajie
  hangzhou, Jiangsu 213200 (CN)

(74) Representative: Groth & Co. KB
P.O. Box 6107
102 32 Stockholm (SE)

(54) **BATTERY THERMAL RUNAWAY PREDICTION METHOD AND APPARATUS, AND COMPUTER-READABLE STORAGE MEDIUM**

(57)    Disclosed are a battery thermal runaway prediction method and apparatus, and a computer-readable storage medium. The battery thermal runaway prediction method includes: when a hot box temperature T, a battery self-heating starting temperature T1 and a thermal runaway starting temperature T2 satisfy T1 < T < T2, if a battery self-heating rate $K_1$ is greater than a rate $K_2$ of heat transfer from a hot box to an interior of a battery, thermal runaway occurring at a surface of the battery first; and if the battery self-heating rate $K_1$ is less than the rate $K_2$ of heat transfer from the hot box to the interior of the battery, thermal runaway occurring first when self-produced heat inside the battery accumulates to a limit value, and thermal runaway not occurring when the self-produced heat inside the battery has not accumulated to the limit value. The battery thermal runaway prediction method can replace a hot box test method to effectively assess safety of a battery and accurately acquire a safe boundary of a battery hot box test. Besides, test cost is low, and a test period is short.

FIG. 1

## Description

The present disclosure claims priority to Patent Application No. 202111058590.X, filed with the Chinese Patent Office on September 10, 2021, entitled "Battery Thermal Runaway Prediction Method and Apparatus, and Computer-Readable Storage Medium", the entire contents of which are incorporated by reference into the present disclosure.

## TECHNICAL FIELD

The present invention relates to the technical field of battery processing, in particular to a battery thermal runaway prediction method. Meanwhile, the present invention further relates to an apparatus for executing the battery thermal runaway prediction method, and a computer-readable storage medium storing a program capable of executing the battery thermal runaway prediction method.

## BACKGROUND

A lithium-ion battery is a secondary battery that is currently attracting much attention due to its high energy density, long cycle life and environmental safety and other advantages. However, with wide application of lithium-ion batteries, battery safety accidents occur from time to time, and safety problems of lithium-ion batteries have attracted more and more attention. Therefore, it is necessary to clearly understand limits that batteries can withstand in the case of abuse.

The abuse of lithium-ion batteries is mainly divided into thermal abuse, mechanical abuse and electrical abuse. Difficulties of passing different safety test items are different, and it is generally believed that needling, overcharging, hot box and short circuit are abuse tests which are more difficult to pass.

The safety of a lithium-ion battery can generally be assessed from a material level and a cell level, and thermal stability of a material is difficult to truly and accurately reflect safety of a cell. At present, a hot box is often used to simulate a battery or an instrument with a battery in a very hot environment, and an endurance limit of the battery is tested by gradually increasing the temperature. This test process is called a hot box test.

However, in the prior art, a hot box test can only assess whether a battery can pass the test at a certain temperature, that is, the hot box test can only assess safety of the battery at a certain temperature, but cannot know a safety boundary of the hot box. In the hot box test process, the larger a capacity of the lithium-ion battery is, the greater damage to the device is, the higher test cost and battery manufacturing cost are, and the longer a test period and a battery manufacturing period are. Besides, the hot box test is difficult to meet requirements of repeated tests under a condition of a small amount of samples.

## SUMMARY OF THE INVENTION

In view of the above, the present disclosure aims to provide a battery thermal runaway prediction method, which can replace a hot box test method and effectively assess safety of a battery.

In order to achieve the above objectives, the technical solutions of the present disclosure are implemented as follows.

A battery thermal runaway prediction method includes: when a hot box temperature T, a battery self-heating starting temperature T1 and a thermal runaway starting temperature T2 satisfy T1 < T < T2: if a battery self-heating rate $K_1$ is greater than a rate $K_2$ of heat transfer from a hot box to an interior of a battery, thermal runaway occurs at a surface of the battery first; and if the battery self-heating rate $K_1$ is less than the rate $K_2$ of heat transfer from the hot box to the interior of the battery, thermal runaway occurs first when self-produced heat inside the battery accumulates to a limit value, and thermal runaway does not occur when the self-produced heat inside the battery has not accumulated to the limit value.

Further, the battery self-heating rate is

$$K_1 = \sum_x^y \left\{ A_x \times e^{\frac{-E_{a,x}}{RT_x}} \times f(\alpha_x) \right\}$$

, where: $A_x$ is a pre-exponential factor; $E_{a,x}$ is activation energy of a reaction; R is a molar gas constant; $T_x$ is a peak temperature; $f(\alpha_x)$ is a reaction mechanism function; x is a lower limit value of a peak sorting of a DSC test curve, and y is an upper limit value of the peak sorting of the DSC test curve.

Further, the reaction mechanism function is $f(\alpha_x)=(1-\alpha_x)^n(1+K_{cat}\alpha_x)$, where: n is a reaction order, $K_{cat}$ is a catalytic coefficient, and $\alpha_x$ is a proportion of reactants participating in an autocatalytic reaction.

Further, the battery self-heating rate $K_1$ is obtained by respectively carrying out a DSC test according to a positive electrode and a negative electrode, a positive electrode and an electrolyte, and a negative electrode and an electrolyte, then carrying out kinetic parameter fitting, respectively calculating self-heating rates of the three, and then summing the self-heating rates of the three.

Further, the DSC test includes steps: S1, charging a battery to a full state of charge by 1/3C CC-CV (Constant Current/Constant Voltage), and then disassembling the battery; S2, soaking and cleaning positive and negative electrode pieces obtained by disassembling, and then drying the positive and negative electrode pieces; S3, punching and cutting the positive and negative electrode pieces in step S2 to obtain a plurality of electrode pieces with a diameter of D, and then placing part of the electrode pieces in the electrolyte to make test samples with components being positive electrode, negative electrode, electrolyte, positive electrode + electrolyte, negative electrode + electrolyte, positive electrode + negative electrode, and positive electrode + negative electrode + electrolyte respectively; and S4, performing the DSC test on each test sample in step S3, and changing an ambient temperature of each test sample at a different heating rate during the test.

Further, in step S2, DMC (dimethyl carbonate) is used as a solvent for soaking and cleaning, and/or, soaking and cleaning are carried out for 3 times, and/or, each soaking lasts for 5 minutes, and/or, the positive electrode piece obtained by disassembling is dried in a vacuum environment at 60 °C.

Further, in step S3, the diameter D is φ5 mm, and/or, a number of the punched and cut positive and negative electrode pieces is more than or equal to 4.

Further, in step S4, temperatures before and after the heating are 25 °C and 450 °C, respectively, and/or, the heating rates are 5 °C/min, 10 °C/min, 15 °C/min, or 20 °C/min, respectively.

Further, the rate of heat transfer from the hot

$$K_2 = \sum_i^m \frac{k_i \, d_i}{d}$$

box to the interior of the battery is ,
where: $k_i$ is a thermal conductivity of each component of the battery; $d_i$ is a thickness of each component of the battery; d is a total thickness of an inner electrode group of the battery; i is a lower limit value of a number of component types of the battery; and m is an upper limit value of a number of the component types of the battery.

Further, the components of the battery includes: a positive electrode coating, a positive electrode current collector, a diaphragm, a negative electrode coating, a negative electrode current collector, an electrolyte and an aluminum shell.

Further, when the hot box temperature T and the battery self-heating starting temperature T1 satisfy T < T1, battery thermal runaway does not occur.

Further, when the hot box temperature T and the thermal runaway starting temperature T2 satisfy T > T2, thermal runaway occurs at a surface of the battery first.

Further, the battery self-heating starting temperature T1 is decided by the battery self-heating rate ≥ 0.02 °C/min; and/or, the thermal runaway starting temperature T2 is decided by the battery self-heating rate > 1 °C/min.

A battery thermal runaway prediction apparatus includes a battery thermal runaway prediction device and a computer, wherein the computer includes a memory and a processor, a computer program is stored in the memory, and the computer program, when run on the processor, executes the battery thermal runaway prediction method of the present disclosure.

A computer-readable storage medium stores a computer program. The computer program, when run on a processor, executes the battery thermal runaway prediction method of the present disclosure.

Compared with the prior art, the present disclosure has the following advantages:

The battery thermal runaway prediction method disclosed by the present disclosure, by comparing the battery self-heating rate $K_1$ and the rate $K_2$ of heat transfer from the hot box to the interior of the battery and acquiring the limit value of the self-generated heat accumulated inside the battery, can replace the hot box test method to assess the safety of the battery and accurately acquire the safety boundary of the battery hot box test, and further realize characterization of the safety of the battery. Besides, the test cost and period can be saved, and the requirements of repeated tests can be met under the condition of a small amount of samples, and the method is quick, simple and effective.

## BRIEF DESCRIPTION OF THE DRAWINGS

The accompanying drawings, which are incorporated in and constitute a part of the present disclosure, are included to provide a further understanding of the present disclosure, the illustrative embodiment of the present disclosure and the description thereof are for the purpose of illustrating the present disclosure, and are not to be construed as unduly limiting the present disclosure. In the accompanying drawings:

FIG. 1 is a DSC test curve chart of each component in the battery according to an embodiment of the present disclosure;
FIG. 2 is a comparison chart of DSC test results of heat production of each component in the battery according to an embodiment of the present disclosure;
FIG. 3 is a comparison chart of results of kinetic parameter fitting data according to an embodiment of the present disclosure; and
FIG. 4 is a comparison chart of thermal conductivity data of each component in the battery according to an embodiment of the present disclosure.

## DETAILED DESCRIPTION

It should be noted that embodiments in the present disclosure and features in the embodiments can be combined with each other without conflicts.

The present disclosure will be described in detail below with reference to the accompanying drawings and in conjunction with the embodiments.

This embodiment relates to a battery thermal runaway prediction method. The method includes: when a hot box temperature T, a battery self-heating starting temperature T1 and a thermal runaway starting temperature T2 satisfy T1 < T < T2: if a battery self-heating rate $K_1$ is greater than a rate $K_2$ of heat transfer from a hot box to an interior of a battery, thermal runaway occurring at a surface of the battery first. If the battery self-heating rate $K_1$ is less than the rate $K_2$ of heat transfer from the hot box to the interior of the battery, thermal runaway occurs first when self-produced heat inside the battery accumulates to a limit value, and thermal runaway does not occur when the self-produced heat inside the battery has not accumulated to the limit value.

It should be noted that the above hot box temperature is a temperature simulating a working environment of the battery. The battery self-heating starting temperature T1 is determined by the battery self-heating rate $\geq 0.02$ °C/min. The thermal runaway starting temperature T2 is determined by the battery self-heating rate $> 1$ °C/min.

In specific implementation, the battery self-heating rate in this embodiment is

$$K_1 = \sum_x^y \left\{ A_x \times e^{\frac{-E_{a,x}}{RT_x}} \times f(\alpha_x) \right\}$$

, where: $A_x$ is a preexponential factor; $E_{a,x}$ is activation energy of a reaction; R is a molar gas constant; $T_x$ is a peak temperature; $f(\alpha_x)$ is a reaction mechanism function; x is a lower limit value of a peak sorting of a DSC test curve, and y is an upper limit value of the peak sorting of the DSC test curve.

It should be noted here that the peak sorting refers to distinguishing the amount of peaks in the DSC test curve, and then sorting all peaks from 1, which can be called the first peak, the second peak, and the y-th peak, x = 1, 2...y. Parameters such as $A_x$, $E_{a,x}$, $T_x$ and $\alpha_x$ correspond to values of the peaks, and the parameters will change accordingly if the values of the peaks are different, which can be determined in a process of fitting the DSC test curve.

Besides, the battery self-heating rate $K_1$ is obtained by respectively carrying out a DSC (Differential Scanning Calorimetry) test according to positive electrode and negative electrode, positive electrode and electrolyte, and negative electrode and electrolyte, then carrying out kinetic parameter fitting, respectively calculating self-heating rates of the three, and then summing the self-heating rates of the three.

The reaction mechanism function is $f(\alpha_x)=(1-\alpha_x)^n(1+K_{cat}\alpha_x)$, where: n is a reaction order, $K_{cat}$ is a catalytic coefficient, and $\alpha_x$ is a proportion of reactants participating in an autocatalytic reaction. Apparently, the reaction mechanism function $f(\alpha_x)=(1-\alpha_x)^n(1+K_{cat}\alpha_x)$ is not fixed, and batteries of different systems further correspond to different reaction mechanism functions in the case of fitting.

In specific implementation, in this embodiment, the rate of heat transfer from the hot box to the interior

$$K_2 = \sum_i^m \frac{k_i d_i}{d}$$

of the battery is , where: $k_i$ is a thermal conductivity of each component of the battery; $d_i$ is a thickness of each component of the battery; d is a total thickness of an inner electrode group of the battery; i is a lower limit value of a number of component types of the battery; and m is an upper limit value of a number of the component types of the battery. The components of the battery includes: a positive electrode coating, a positive electrode current collector, a diaphragm, a negative electrode coating, a negative electrode current collector, an electrolyte and an aluminum shell.

In this embodiment, when the hot box temperature T and the battery self-heating starting temperature T1 satisfy T < T1, battery thermal runaway does not occur. Besides, when the hot box temperature T and the thermal runaway starting temperature T2 satisfy T > T2, thermal runaway occurs at a surface of the battery first.

The method of the present disclosure is further described below based on a specific test to verify feasibility of the method of the present disclosure. Firstly, each component of the battery is subjected to a DSC test, three items with the maximum heat release are selected to test at different heating rates, data obtained from the test is fitted to obtain kinetic parameters, and then self-heating rates are calculated. The specific test process and test parameters are as follows:

S1. Charge a battery to a full state of charge by 1/3C CC-CV (Constant Current/Constant Voltage), and then disassemble the battery in a glove box.

S2. Soak and clean positive and negative electrode pieces obtained by disassembling with DMC (dimethyl carbonate) for three times and 5 min each time, and then air the positive and negative electrode pieces in the glove box, where, the positive electrode piece needs to be baked in vacuum at 60 °C, and then packaged into a aluminum-plastic film, while the negative electrode piece does not need additional conditions, and is aired at a room temperature in the glove box, and then packaged into the aluminum-plastic film.

It should be noted that DMC (dimethyl carbonate) is an organic compound with a chemical formula of $C_3H_6O_3$. DMC has excellent solubility and low boiling point characteristics. In practical applications, in addition to using the DMC to soak and clean the positive and negative electrode pieces, other organic solvents with low boiling points can also be used, such as DEC (diethyl carbonate).

S3. Make a sample in the glove box, punch and cut a plurality of electrode pieces (including at least four positive electrode pieces and four negative electrode pieces) with a diameter of D (a value of D can be changed according to an actual design requirement, and the diameter of $\varphi 5$ mm is selected for this test), and take out a plurality of steel crucibles;

then, put the plurality of electrode pieces into the steel crucibles respectively, and put 2 $\mu$L of electrolyte into part of the steel crucibles to make test samples with components being positive electrode, negative electrode, electrolyte, positive electrode + electrolyte, negative electrode + electrolyte, positive electrode + negative electrode, and positive electrode + negative electrode + electrolyte.

S4. Perform the DSC test on each test sample in step S3, and change a temperature of each test sample at a different heating rate during the test from 25 °C to 450 °C, where the heating rates are 5 °C/min, 10 °C/min, 15 °C/min, or 20 °C/min, respectively.

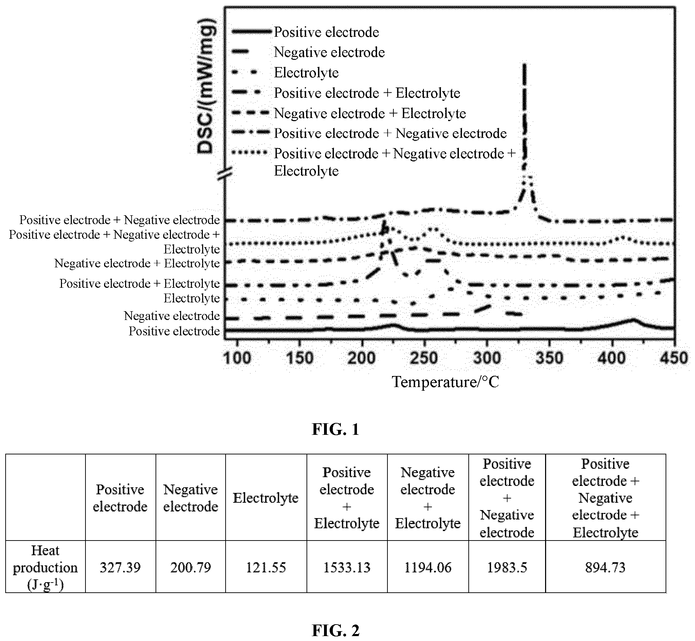

Test results are shown in FIGs. 1 to 4, in which FIG. 1 shows a DSC test curve of each component in the battery, a horizontal axis being a temperature, and a vertical axis being a heat release. Referring to FIG. 1, when a temperature in the horizontal axis is 100 °C, test samples characterized by curves in the figure sequentially from bottom to top are positive electrode, negative electrode, electrolyte, positive electrode + electrolyte, negative electrode + electrolyte, positive electrode + negative electrode, and positive electrode + negative electrode + electrolyte. FIG. 2 is a comparison chart of DSC test results of heat production of each component in the battery, from which it can be seen that the test samples of positive electrode + electrolyte, negative electrode + electrolyte and positive electrode + negative electrode have the highest heat production.

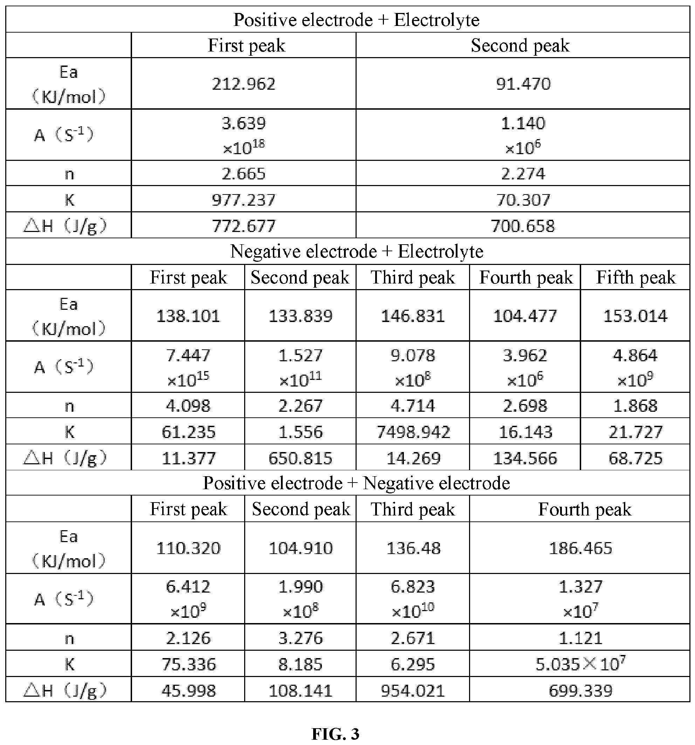

Therefore, these three items are selected for kinetic parameter fitting, that is, the reaction mechanism function $f(\alpha_x)=(1-\alpha_x)^n(1+K_{cat}\alpha_x)$ is used for calculation to obtain the fitting results shown in FIG. 3. Now, the test result of positive electrode + electrolyte in FIG. 3 is selected to calculate the self-heating rate of the battery:

$K_{positive\ electrode\ +\ electrolyte}$ = $K_{positive\ electrode\ +\ electrolyte\ -\ 1}$ + $K_{positive\ electrode\ +\ electrolyte\ -\ 2}$ = {3.639 × 10^{18} × e [(-212962) / (8.314 × 491.47)] × (1 - 0.39)^{2.665} × (1 + 977.237 × 0.39)} + {1.14 × 10^6 × e [(-91470) / (8.314 × 530.413)] × (1 - 0.61)^{2.274} × (1 + 70.307 × 0.61)} = 14.4

where, 3.639×10^{18} and 1.14×10^6 are pre-exponential factors of the corresponding positive electrode + electrolyte test samples in FIG. 3;
212962 and 91470 are activation energies of reactions in FIG. 3 for the positive electrode + electrolyte test samples;
8.314 is a molar gas constant R; 491.47 and 530.413 are hot box temperatures T;
$(1-0.39)^{2.665}×(1+977.237×0.39)$ and $(1-0.61)^{2.274}×(1+70.307×0.61)$ are reaction mechanism functions $f(\alpha_x)$;
0.39 and 0.61 are $\alpha_x$, which are obtained by fitting kinetic parameters using NETZSCHKineticsNeo software (NETZSCH thermal kinetics software).

In the same way, $K_{negative\ electrode\ +\ electrolyte}$ = 11.26; and $K_{positive\ electrode\ +\ negative\ electrode}$ = 11.02.

Therefore, the total self-heating rate of the battery is $K_1$=14.4+11.26+11.02=36.68.

At this time, the internal heat transfer rate of the battery is calculate by the heat transfer rate formula

$$K_2 = \sum_i^m \frac{k_i\, d_i}{d}$$

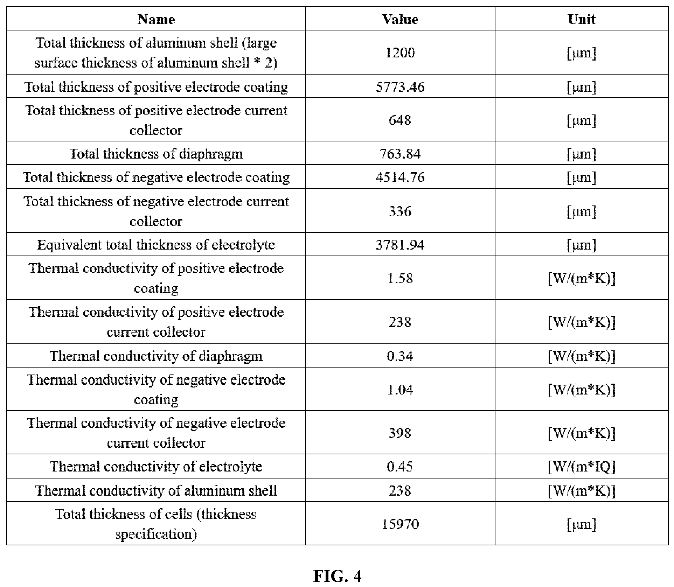

, and according to the thermal conductivity of each component in the battery in FIG. 4, and the thickness $d_i$ of each component and the total thickness d of the electrode group in the battery tested by a conventional means.

As can be seen from comparison between the total battery self-heating rate $K_1$ and the rate $K_2$ of heat transfer in the battery, due to $K_1 < K_2$, thermal runaway occurs first when self-produced heat inside the battery accumulates to a limit value, and thermal runaway does not occur when the self-produced heat inside the battery has not accumulated to the limit value. Therefore, on the basis of the total battery self-heating rate $K_1$ and the heat transfer rate $K_2$ obtained by calculation, the safety of the battery can be characterized, and $K_1$ can also be used to accurately characterize the safety boundary of the battery hot box test.

To sum up, a way to characterize the safety of the battery and the safety boundary in this embodiment is specifically as follows:

A. When T < T1, the battery can work safely without thermal runaway, and at this time, T1 is used to characterize the safety boundary at which the battery can work safely.
B. When T > T2, the battery can not work, thermal runaway occurs at the surface thereof first, and at this time, T2 is used to characterize to exceed the safety operation boundary of the battery.
C. When T1 < T < T2, $K_1$ and $K_2$ need to be calculated; if $K_1 > K_2$, thermal runaway occurs at the surface of the battery first, and at this time, T is used to characterize to exceed the safety operation boundary of the battery; and if $K_1 < K_2$, $T/K_1$=h (working time), a working time of the battery at the temperature T can be calculated, and at this time, T and h are together used to characterize the safety operation boundary of the battery.

The battery thermal runaway prediction method of this embodiment, by comparing the battery self-heating rate $K_1$ and the rate $K_2$ of heat transfer from the hot box to the interior of the battery and acquiring the limit value of the self-generated heat accumulated inside the battery, can replace the hot box test method to assess the safety of the battery and accurately acquire the safety boundary of the battery hot box test, and further realize characterization of the safety of the battery. Besides, the test cost and period can be saved, and the requirements of repeated tests can be met under the condition of a small amount of samples, and the method is quick, simple and effective.

This embodiment further provides a battery thermal runaway prediction apparatus, including a battery thermal runaway prediction device and a computer.

The computer includes a memory and a processor, a computer program is stored in the memory, and the computer program, when run on the processor, executes the battery thermal runaway prediction method in this embodiment.

In addition, this embodiment further provides a computer-readable storage medium, in which a computer program is stored. The computer program, when run on the processor, executes the battery thermal runaway prediction method in this embodiment.

Those skilled in the art may understand that implementation of all or part of the process of the method of the above embodiment is accomplished by the computer program or instruction-related hardware. The computer program may be stored in a computer-readable storage medium, and when executed, the program may include the process of the above embodiment of each above method. Any reference to a memory, a processor, a computer program, or other medium used in the embodiments presented herein may include a non-volatile and/or volatile memory.

The non-volatile memory can include a read only memory (ROM), a programmable ROM (PROM), an electrically programmable ROM (EPROM), an electrically erasable programmable ROM (EEPROM), or a flash memory. The volatile memory may include a random access memory (RAM) or an external cache memory.

Apparently, the RAM may be obtained in a variety of forms, such as a static RAM (SRAM), a dynamic RAM (DRAM), a double data rate SDRAM (DDRSDRAM), a memory bus (Rambus) direct RAM (RDRAM), a synchronous DRAM (SDRAM), a direct Rambus dynamic RAM (DRDRAM), and a Rambus dynamic RAM (RDRAM).

The above description is only a preferred embodiment of the present disclosure, and is not intended to limit the present disclosure. Any modification, equivalent substitution, improvement, and the like within the spirit and principle of the present disclosure shall be included in the protection scope of the present disclosure.

**Claims**

1. A battery thermal runaway prediction method, comprising:
   when a hot box temperature T, a battery self-heating starting temperature T1 and a thermal runaway starting temperature T2 satisfy T1 < T < T2:

   if a battery self-heating rate $K_1$ is greater than a rate $K_2$ of heat transfer from a hot box to an interior of a battery, thermal runaway occurring at a surface of the battery first; and
   if the battery self-heating rate $K_1$ is less than the rate $K_2$ of heat transfer from the hot box to the interior of the battery, thermal runaway occurring first when self-produced heat inside the battery accumulates to a limit value, and thermal runaway not occurring when the self-produced heat inside the battery has not accumulated to the limit value.

2. The battery thermal runaway prediction method of claim 1, wherein:

   the battery self-heating rate is

   $$K_1 = \sum_{x}^{y} \left\{ A_x \times e^{\frac{-E_{a,x}}{RT_x}} \times f(\alpha_x) \right\},$$

   wherein: $A_x$ is a pre-exponential factor; $E_{a,x}$ is activation energy of a reaction; R is a molar gas constant; $T_x$ is a peak temperature; $f(\alpha_x)$ is a reaction mechanism function; x is a lower limit value of a peak sorting of a DSC test curve, and y is an upper limit value of the peak sorting of the DSC test curve.

3. The battery thermal runaway prediction method of claim 2, wherein:

   the reaction mechanism function is $f(\alpha_x)=(1-\alpha_x)^n(1+K_{cat}\alpha_x)$,
   wherein: n is a reaction order, $K_{cat}$ is a catalytic coefficient, and $\alpha_x$ is a proportion of reactants participating in an autocatalytic reaction.

4. The battery thermal runaway prediction method of claim 2, wherein:
   the battery self-heating rate $K_1$ is obtained by respectively carrying out a DSC test according to a positive electrode and a negative electrode, a positive electrode and an electrolyte, and a negative electrode and an electrolyte, then carrying out kinetic parameter fitting, respectively calculating self-heating rates of the three, and then summing the self-heating rates of the three.

5. The battery thermal runaway prediction method of claim 4, wherein:
   the DSC test comprises steps:

   S1, charging a battery to a full state of charge by 1/3C CC-CV (Constant Current/Constant Voltage), and then disassembling the battery;
   S2, soaking and cleaning positive and negative electrode pieces obtained by disassembling, and then drying the positive and negative electrode pieces;
   S3, punching and cutting the positive and negative electrode pieces in step S2 to obtain a plurality of electrode pieces with a diameter of D, and then placing part of the electrode pieces in the electrolyte to make test samples with components being positive electrode, negative electrode, electrolyte, positive electrode + electrolyte, negative electrode + electrolyte, positive electrode + negative electrode, and positive electrode + negative electrode + electrolyte respectively; and

S4, performing the DSC test on each test sample in step S3, and changing an ambient temperature of each test sample at a different heating rate during the test.

6. The battery thermal runaway prediction method of claim 5, wherein:
in step S2, DMC (dimethyl carbonate) is used as a solvent for soaking and cleaning, and/or, soaking and cleaning are carried out for 3 times, and/or, each soaking lasts for 5 minutes, and/or, the positive electrode piece obtained by disassembling is dried in a vacuum environment at 60 °C.

7. The battery thermal runaway prediction method of claim 5, wherein:
in step S3, the diameter D is φ5 mm, and/or, a number of the punched and cut positive and negative electrode pieces is more than or equal to 4.

8. The battery thermal runaway prediction method of claim 5, wherein:
in step S4, temperatures before and after the heating are 25 °C and 450 °C, respectively, and/or, the heating rates are 5 °C/min, 10 °C/min, 15 °C/min, or 20 °C/min, respectively.

9. The battery thermal runaway prediction method of claim 1, wherein:

the rate of heat transfer from the hot box to the

$$K_2 = \sum_i^m \frac{k_i \, d_i}{d}$$

interior of the battery is , wherein: $k_i$ is a thermal conductivity of each component of the battery; $d_i$ is a thickness of each component of the battery; d is a total thickness of an inner electrode group of the battery; i is a lower limit value of a number of component types of the battery; and m is an upper limit value of a number of the component types of the battery.

10. The battery thermal runaway prediction method of claim 9, wherein:
the components of the battery comprises: a positive electrode coating, a positive electrode current collector, a diaphragm, a negative electrode coating, a negative electrode current collector, an electrolyte and an aluminum shell.

11. The battery thermal runaway prediction method of any one of claims 1-10, wherein:

when the hot box temperature T and the battery self-heating starting temperature T1 satisfy T < T1, battery thermal runaway does not occur.

12. The battery thermal runaway prediction method of any one of claims 1-10, wherein:
when the hot box temperature T and the thermal runaway starting temperature T2 satisfy T > T2, thermal runaway occurs at a surface of the battery first.

13. The battery thermal runaway prediction method of any one of claims 1-10, wherein:
the battery self-heating starting temperature T1 is determined by the battery self-heating rate ≥ 0.02 °C/min; and/or, the thermal runaway starting temperature T2 is determined by the battery self-heating rate > 1 °C/min.

14. A battery thermal runaway prediction apparatus, comprising a battery thermal runaway prediction device and a computer, wherein the computer comprises a memory and a processor, a computer program is stored in the memory, and the computer program, when run on the processor, executes the battery thermal runaway prediction method of any one of claims 1-13.

15. A computer-readable storage medium, in which a computer program is stored, wherein the computer program, when run on a processor, executes the battery thermal runaway prediction method of any one of claims 1-13.

**FIG. 1**

| | Positive electrode | Negative electrode | Electrolyte | Positive electrode + Electrolyte | Negative electrode + Electrolyte | Positive electrode + Negative electrode | Positive electrode + Negative electrode + Electrolyte |
|---|---|---|---|---|---|---|---|
| Heat production $(J \cdot g^{-1})$ | 327.39 | 200.79 | 121.55 | 1533.13 | 1194.06 | 1983.5 | 894.73 |

**FIG. 2**

| Positive electrode + Electrolyte | | |
|---|---|---|
| | First peak | Second peak |
| Ea (KJ/mol) | 212.962 | 91.470 |
| A $(S^{-1})$ | 3.639 $\times 10^{18}$ | 1.140 $\times 10^{6}$ |
| n | 2.665 | 2.274 |
| K | 977.237 | 70.307 |
| $\triangle$H (J/g) | 772.677 | 700.658 |

| Negative electrode + Electrolyte | | | | | |
|---|---|---|---|---|---|
| | First peak | Second peak | Third peak | Fourth peak | Fifth peak |
| Ea (KJ/mol) | 138.101 | 133.839 | 146.831 | 104.477 | 153.014 |
| A $(S^{-1})$ | 7.447 $\times 10^{15}$ | 1.527 $\times 10^{11}$ | 9.078 $\times 10^{8}$ | 3.962 $\times 10^{6}$ | 4.864 $\times 10^{9}$ |
| n | 4.098 | 2.267 | 4.714 | 2.698 | 1.868 |
| K | 61.235 | 1.556 | 7498.942 | 16.143 | 21.727 |
| $\triangle$H (J/g) | 11.377 | 650.815 | 14.269 | 134.566 | 68.725 |

| Positive electrode + Negative electrode | | | | |
|---|---|---|---|---|
| | First peak | Second peak | Third peak | Fourth peak |
| Ea (KJ/mol) | 110.320 | 104.910 | 136.48 | 186.465 |
| A $(S^{-1})$ | 6.412 $\times 10^{9}$ | 1.990 $\times 10^{8}$ | 6.823 $\times 10^{10}$ | 1.327 $\times 10^{7}$ |
| n | 2.126 | 3.276 | 2.671 | 1.121 |
| K | 75.336 | 8.185 | 6.295 | $5.035 \times 10^{7}$ |
| $\triangle$H (J/g) | 45.998 | 108.141 | 954.021 | 699.339 |

**FIG. 3**

| Name | Value | Unit |
|---|---|---|
| Total thickness of aluminum shell (large surface thickness of aluminum shell * 2) | 1200 | [μm] |
| Total thickness of positive electrode coating | 5773.46 | [μm] |
| Total thickness of positive electrode current collector | 648 | [μm] |
| Total thickness of diaphragm | 763.84 | [μm] |
| Total thickness of negative electrode coating | 4514.76 | [μm] |
| Total thickness of negative electrode current collector | 336 | [μm] |
| Equivalent total thickness of electrolyte | 3781.94 | [μm] |
| Thermal conductivity of positive electrode coating | 1.58 | [W/(m*K)] |
| Thermal conductivity of positive electrode current collector | 238 | [W/(m*K)] |
| Thermal conductivity of diaphragm | 0.34 | [W/(m*K)] |
| Thermal conductivity of negative electrode coating | 1.04 | [W/(m*K)] |
| Thermal conductivity of negative electrode current collector | 398 | [W/(m*K)] |
| Thermal conductivity of electrolyte | 0.45 | [W/(m*IQ] |
| Thermal conductivity of aluminum shell | 238 | [W/(m*K)] |
| Total thickness of cells (thickness specification) | 15970 | [μm] |

**FIG. 4**

| INTERNATIONAL SEARCH REPORT | International application No. |
| --- | --- |
| | **PCT/CN2022/094746** |

| A. | CLASSIFICATION OF SUBJECT MATTER |
| --- | --- |

G06F 30/20(2020.01)i

According to International Patent Classification (IPC) or to both national classification and IPC

| B. | FIELDS SEARCHED |
| --- | --- |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; CNKI; DWPI; USTXT; WOTXT; EPTXT; ENTXT: 热失控, 电池, 传热, 产热, 温度, 速率, 表面, 内部, thermal runaway, battery, conduct heat, heat product+, temperature, rate, surface, inner

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 113505500 A (SVOLT ENERGY TECHNOLOGY CO., LTD.) 15 October 2021 (2021-10-15) claims 1-10, and description, paragraphs [0006]-[0048] | 1-15 |
| A | CN 111475933 A (NO.18 RESEARCH INSTITUTE OF CHINA ELECTRONICS TECHNOLOGY GROUP CORPORATION) 31 July 2020 (2020-07-31) description, paragraphs [0049]-[0065] | 1-15 |
| A | CN 108446434 A (TSINGHUA UNIVERSITY) 24 August 2018 (2018-08-24) entire document | 1-15 |
| A | CN 109884527 A (SHENZHEN BAK POWER BATTERY CO., LTD.) 14 June 2019 (2019-06-14) entire document | 1-15 |
| A | US 2020036068 A1 (NATIONAL RESEARCH COUNCIL OF CANADA) 30 January 2020 (2020-01-30) entire document | 1-15 |

| ☐ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **20 June 2022** | **29 June 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<table>
<tr><td colspan="2">INTERNATIONAL SEARCH REPORT<br>Information on patent family members</td><td colspan="2">International application No.<br>**PCT/CN2022/094746**</td></tr>
</table>

| Patent document cited in search report | | | Publication date (day/month/year) | Patent family member(s) | | | Publication date (day/month/year) |
|---|---|---|---|---|---|---|---|
| CN | 113505500 | A | 15 October 2021 | CN | 113505500 | B | 10 December 2021 |
| CN | 111475933 | A | 31 July 2020 | | None | | |
| CN | 108446434 | A | 24 August 2018 | US | 2019243931 | A1 | 08 August 2019 |
| | | | | CN | 108446434 | B | 11 February 2020 |
| | | | | US | 10509874 | B2 | 17 December 2019 |
| CN | 109884527 | A | 14 June 2019 | | None | | |
| US | 2020036068 | A1 | 30 January 2020 | CN | 110192104 | A | 30 August 2019 |
| | | | | KR | 20190108133 | A | 23 September 2019 |
| | | | | CA | 3050792 | A1 | 26 July 2018 |
| | | | | WO | 2018132911 | A1 | 26 July 2018 |
| | | | | EP | 3566044 | A1 | 13 November 2019 |
| | | | | EP | 3566044 | A4 | 20 November 2019 |
| | | | | JP | 2020510954 | W | 09 April 2020 |
| | | | | CA | 3050792 | C | 23 February 2021 |
| | | | | HK | 40017764 | A0 | 25 September 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202111058590X A